# EUROPÄISCHE PATENTSCHRIFT

(11) **EP 1 300 086 B1**
(45) Veröffentlichungstag und Bekanntmachung des Hinweises auf die Patenterteilung: **26.07.2006**
(21) Anmeldenummer: 02025322.5
(22) Anmeldetag: 11.04.1998
(51) Int. Cl.: A23P 1/10, A23G 1/21, A23G 3/02, A23K 1/18, A23N 17/00

(54) **Verfahren zum Herstellen von schalenförmigen Verzehrgütern**
Process for making shell-shaped consumable items
Procédé de fabrication d'articles de consommation pourvus d'une coquille

(30) Priorität: 25.07.1997 DE 19732036; 17.05.1997 DE 19720844
(43) Veröffentlichungstag der Anmeldung: 09.04.2003
(62) Teilanmeldung aus: 98919256.2
(73) Patentinhaber: KMB Produktions AG, 8552 Felben (CH)
(72) Erfinder: Knobel, Josef, 5586 Wigoltingen (CH)
(74) Vertreter: Weiss, Peter

(56) Entgegenhaltungen:
- EP-A- 0 156 324
- EP-A- 0 715 813
- EP-A- 0 914 775
- EP-A- 0 914 776
- WO-A-95/32633
- WO-A-97/49296
- DE-A- 19 535 292
- GB-A- 207 974
- GB-A- 996 995
- GB-A- 1 483 614
- US-A- 4 685 877

## Beschreibung

Die vorliegende Erfindung betrifft ein Verfahren zum Herstellen von Verzehrgütern mit einer äusseren Schale aus einer fliessfähigen Masse, welche in eine Form eingefüllt wird, wobei in die Form ein temperierter Stempel eintaucht und die Masse fliesspresst.

Bei einer Reihe von Verzehrgütern ist es notwendig, eine äussere Schale aus einer fliessfähigen Masse herzustellen, wobei diese fliessfähige Masse in einen Hohlraum eingepresst wird und dort durch entsprechende Temperierung erstarrt und so eine fest Form annimmt. Beispielsweise gilt dies für Hundefutter, wenn eine äussere Fettschale hergestellt wird, die ein Fleischgemisch od. dgl. umhüllt. Dabei wird erwärmtes, fliessfähiges Fett in eine Form gebracht und durch ein Druckstempel schalenartig ausgestaltet, wobei der Stempel gekühlt ist und beim Formvorgang die fettartige Schale erstarrt.

In erster Linie, und darauf soll sich die vorliegende Erfindung besonders beziehen, gilt dieser Vorgang für die Herstellung einer Schokoladenschale, die später mit einer Füllung gefüllt wird. Beispielsweise ist aus der GB-PS 207 974 bekannt, einen von einem Kühlmittel durchströmten Stempel in die Schokoladenmasse einzutauchen, wobei das Eintauchen in einem solchen Masse erfolgt, dass die entstehende Schokoladenschale die gewünschte Dicke erhält. Damit der Stempel wieder von der Schokoladenmasse getrennt werden kann, ist der Stempel mit einem entsprechenden Trennmittel versehen, so dass die Schokoladenmasse nicht an der Oberfläche des Stempels haften bleibt.

Aus dem Gebrauchsmuster 93 21 186 ist ferner bekannt, dass der Stempel bzw. die Vorsprünge oder Kühlkörper an dem Stempel bis auf eine Temperatur unter 0° C abgekühlt werden und dann in die Schokoladenmasse eintauchen. Durch das Abkühlen entsteht auf der Oberfläche des Stempels eine hauchdünne Eisschicht, da der Taupunkt der Umgebungsluft über der Werkzeugtemperatur liegt, die den Stempel von der Schokoladenmasse trennt. Durch die dünne Eisschicht kann es aber zur Fleckenbildung auf der Innenseite des Verzehrgutes kommen, was wiederum unerwünscht ist.

Das gleiche gilt auch für den Vorschlag nach der EP 0 715 813, wonach das Stempelelement mindestens auf eine solche Temperatur heruntergekühlt ist, dass der Taupunkt, der die Schokoladenmasse umgebenden Atmosphäre erreicht bzw. unterschritten wird. Auch hierbei beschlägt die der Schokoladenmasse zugewandte Fläche des Stempelelementes vor dem Kontakt mit der Schokoladenmasse.

Ein entsprechendes Verfahren ist auch aus der WO95/32633 bekannt, wobei zur Kompensation von Ungenauigkeiten bei der Dosierung der vorbestimmten Menge an Schokoladenmasse um den Stempel ein Ring vorgesehen ist, der axial durch beispielsweise einen Gummieinsatz nachgiebig ist.

Der vorliegenden Erfindung liegt die Aufgabe zugrunde, ein Verfahren der o.g. Art zu entwickeln, bei dem die Herstellung des Verzehrgutes verbessert wird.

Zur Lösung dieser Aufgabe führt, dass die Unebenheiten der Form durch eine Mehrzahl von federnd gelagerten Druckstiften ausgeglichen werden.

Es wurde festgestellt, dass die Form, die beispielsweise aus Kunststoff bestehen kann, nach mehrmaligem Gebrauch zu Verwerfungen neigt. Deshalb sollen erfindungsgemäss am Stempel bevorzugt federnde Druckstifte vorgesehen sein, welche beim Schliessen des Werkzeuges auf die Form drücken und diese Unebenheiten ausgleichen.

Der besondere Vorteil der Erfindung liegt darin, dass durch das Vibrieren eine gleichmässige Verteilung der die äussere Schale bildenden Masse stattfindet, so dass es hier zu einer spiegelglatten Oberfläche kommt. Bevorzugt geschieht das Vibrieren gleichmässig und vor dem Eintauchen des Stempels.

Damit das ganze Verfahren kontinuierlich durchgeführt werden kann, sollen Stempel und Form gemeinsam während des Temperier- und Fliesspressvorganges bewegt werden. Dabei ist es notwendig, dass Form und Stempel zueinander zentriert werden, weshalb entsprechende Zentrierstifte vorgesehen sind, die in entsprechende Zentrierbohrungen eingreifen.

Obwohl die vorliegende Erfindung besonders gut zur Herstellung von Schokoladenschalen geeignet ist, soll sie nicht darauf beschränkt sein, da auch andere Verzehrgüter sehr günstig mit diesem Verfahren hergestellt werden können.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Frontansicht einer Vorrichtung zum Herstellen von Verzehrgütern;
Figur 2 eine Seitenansicht der Vorrichtung gemäss Figur 1;
Figur 3 einen Querschnitt durch ein erfindungsgemässes Werkzeug zum Herstellen von Verzehrgütern.

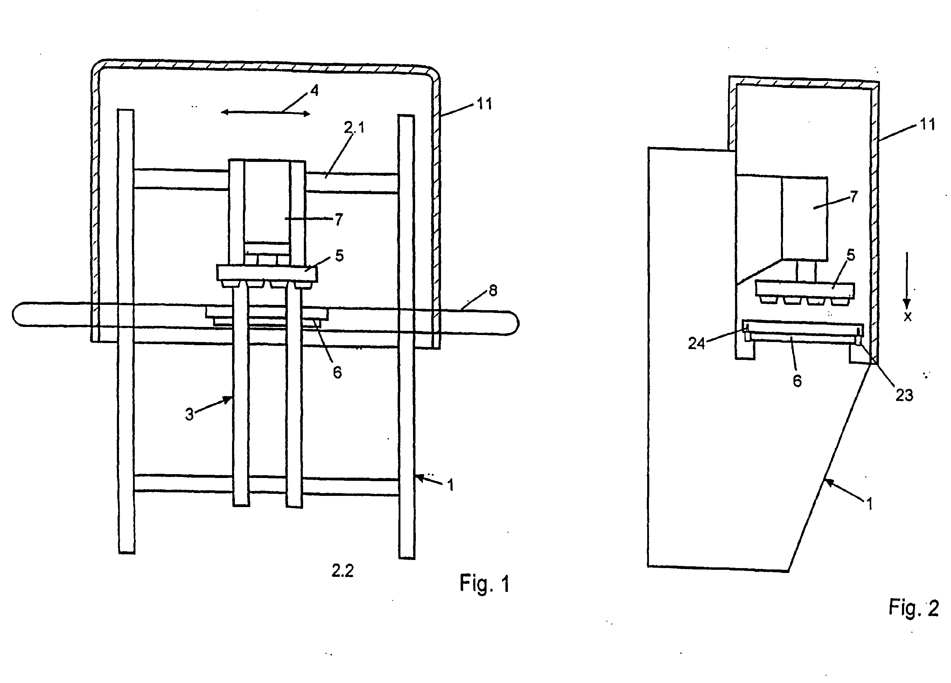

Gemäss Figur 1 weist eine erfindungsgemässe Vorrichtung zur Herstellung von Verzehrgütern einen Maschinenrahmen 1 auf, in dem sich zwei horizontale Führungssäulen 2.1 und 2.2 befinden. An diesen Führungssäulen 2.1 und 2.2 wird ein Schlitten 3 in Richtung des Doppelpfeiles 4 geführt, wobei dieser Schlitten 3 einen Stempel 5 und einen Tisch 6 ebenfalls in Richtung des Doppelpfeiles 4 führt. Der Stempel 5 ist an einer Hubeinrichtung 7 angeordnet und kann in Hubrichtung x (siehe Figur 2) bewegt werden.

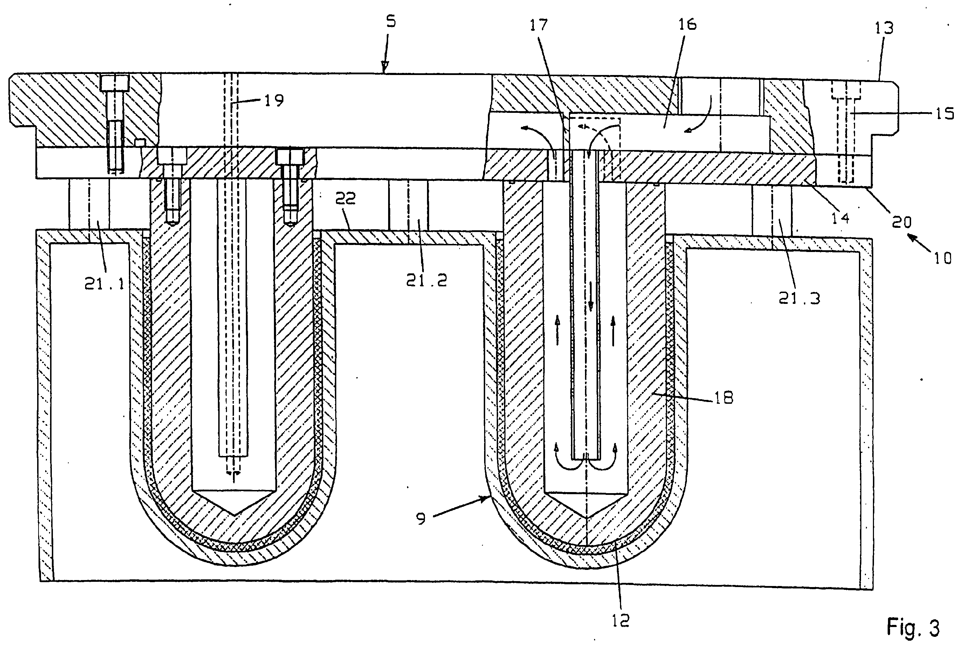

Über den Tisch 6 läuft ein Endlosband 8, auf welches eine in Figur 3 gezeigte Form 9 aufgelegt werden kann. Form 9 bildet zusammen mit dem Stempel 5 ein Werkzeug 10 zur Herstellung von Verzehrgütern. Dieses Werkzeug 10 und ein grosser Teil des Schlittens 3 befindet sich innerhalb eines geschlossenen Gehäuses 11.

Gemäss Figur 3 weist die Form 9 Hohlräume 12 auf, die in Gebrauchslage mit einer Masse zum Herstellen des Verzehrgutes gefüllt werden. Dementsprechend besitzt der Hohlraum 12 auch eine Form, die der gewünschten äusseren Form des Verzehrgutes entspricht.

Der Stempel 5 weist zwei Platten 13 und 14 auf, die über Schrauben 15 miteinander verbunden sind. In beide Platten 13 und 14 sind Kanäle 16 und Steg 17 eingearbeitet, die der Führung eines Kühlmediums dienen. Ferner sind an der Platte 14 Vorsprünge 18 festgelegt, die mit den Hohlräumen 12 zur Herstellung des Verzehrgutes zusammenwirken. Auch in diesen Vorsprüngen 18 wird das Kühlmedium geführt. Ferner ist gestrichelt ein Temperatursensor 19 angedeutet, mit dem die Temperatur des Stempels 5 und insbesondere der Vorsprünge 18 ermittelt werden kann.

Von einer Unterfläche 20 der Platte 14 ragen desweiteren Druckstifte 21.1 und 21.2 ab, welche in Schliesslage des Werkzeuges 10 auf eine Oberfläche 22 der Form 9 drücken. Damit wird die Form 9 auf das Endlosband 8 gedrückt und Verwerfungen der Form 9 ausgeglichen.

Die Funktionsweise der vorliegenden Erfindung ist folgende:

Eine Form 9 wird beispielsweise linksseitig in Figur 1 auf das Endlosband 8 aufgelegt. Neben dem Endlosband 8 läuft bevorzugt eine Kette 23, an der Vorschubstifte 24 vorgesehen sind. Diese Vorschubstifte 24 ragen über das Endlosband 8 hinaus und nehmen die Form 9 mit.

Der Schlitten 3 befindet sich in Figur 1 soweit wie möglich links. Sobald die Form 9 auf dem Tisch 6 angekommen ist, wird der Stempel 5 mittels der Hubeinrichtung 7 abgesenkt, die Vorsprünge 18 greifen in die Hohlräume 12 ein, wobei die Masse des Verzehrgutes sich in dem verbleibenden Hohlraum verteilt. Gleichzeitig drücken die Druckstifte 21.1 und 21.2 auf die Form 9, so dass mögliche Verwerfungen der Form 9 ausgeglichen sind.

Nunmehr fährt der Schlitten 7 mit dem Endlosband 8 mit, wobei gleichzeitig das Verzehrgut in gewünschter Weise temperiert wird.

Sobald der Schlitten 7 in Figur 1 rechtsseitig angekommen ist, wird der Stempel 5 angehoben und die Form 9 freigegeben, die nunmehr aus dem Gehäuse 11 auslaufen kann.

### Positionszahlenliste

| | | | | | |
|---|---|---|---|---|---|
| 1 | Maschinenrahmen | 34 | | 67 | |
| 2 | Führungssäulen | 35 | | 68 | |
| 3 | Schlitten | 36 | | 69 | |
| 4 | Pfeil | 37 | | 70 | |
| 5 | Stempel | 38 | | 71 | |
| 6 | Tisch | 39 | | 72 | |
| 7 | Hubeinrichtung | 40 | | 73 | |
| 8 | Endlosband | 41 | | 74 | |
| 9 | Form | 42 | | 75 | |
| 10 | Werkzeug | 43 | | 76 | |
| 11 | Gehäuse | 44 | | 77 | |
| 12 | Hohlraum | 45 | | 78 | |
| 13 | Platte | 46 | | 79 | |
| 14 | Platte | 47 | | | |
| 15 | Schrauben | 48 | | | |
| 16 | Kanal | 49 | | | |
| 17 | Steg | 50 | | | |
| 18 | Vorsprung | 51 | | | |
| 19 | Temperatursensor | 52 | | | |
| 20 | Unterfläche | 53 | | | |
| 21 | Druckstift | 54 | | | |
| 22 | Oberfläche | 55 | | | |
| 23 | Kette | 56 | | | |
| 24 | Vorschubstifte | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | X | Hubrichtung |
| 32 | | 65 | | | |
| 33 | | 66 | | | |

## Patentansprüche

1. Verfahren zum Herstellen von Verzehrgütern mit einer äusseren Schale aus einer fliessfähigen Masse, welche in eine Form eingefüllt wird, wobei in die Form (9) ein temperierter Stempel (5) eintaucht und die Masse fliesspresst,
**dadurch gekennzeichnet,**
**dass** die Unebenheiten der Form (9) durch eine Mehrzahl von federnd gelagerten Druckstiften (21) ausgeglichen werden.

2. Verfahren nach Anspruch 1, **dadurch gekennzeichnet, dass** die Form (9) gleichmässig vor dem Eintauchen des Stempels (5) vibriert wird.

3. Verfahren nach Anspruch 1 oder 2, **dadurch gekennzeichnet, dass** Stempel (5) und Form (9) gemeinsam während des Temperier- und Fliesspressvorganges bewegt werden.

4. Verfahren nach einem der Ansprüche 1 bis 3, **dadurch gekennzeichnet, dass** Form (9) und Stempel (5) zueinander zentriert werden.

5. Vorrichtung zur Durchführung des Verfahrens nach wenigstens einem der Ansprüche 1 bis 4, **dadurch gekennzeichnet, dass** sich der Stempel (5) und die Form (9) beim Fliesspressen in einem geschlossenen Gehäuse (11) befinden.

6. Vorrichtung nach Anspruch 5, **dadurch gekennzeichnet, dass** die Form (9) auf einem Endlosband (8) angeordnet ist, das unter dem Stempel (5) läuft.

7. Vorrichtung nach Anspruch 6, **dadurch gekennzeichnet, dass** seitlich mit dem Endlosband (8) eine Kette (23) od. dgl. mitläuft, an welcher Vorschubstifte (24) vorgesehen sind.

8. Vorrichtung nach einem der Ansprüche 5 bis 7, **dadurch gekennzeichnet, dass** der Stempel (5) an einem Schlitten (3) vorgesehen ist, der den Stempel (5) in Transportrichtung der Form (9) bewegt.

9. Vorrichtung nach Anspruch 8, **dadurch gekennzeichnet, dass** der Schlitten (3) eine Hubeinrichtung (7) für den Stempel (5) beinhaltet.

10. Vorrichtung nach wenigstens einem der Ansprüche 5 bis 9, **dadurch gekennzeichnet, dass** vom Stempel (5) Druckstifte (21) zur Form (9) hin abragen.

## Claims

1. Method of manufacturing edible products having an outer shell of a free-flowing substance that is introduced into a mould, wherein a temperature-controlled punch (5) engages into the mould (9) and flow-moulds the substance,
**characterized in**
**that** the unevenness of the mould (9) is compensated by means of a plurality of spring-mounted press pins (21).

2. Method according to claim 1, **characterized in that** the mould (9) is uniformly vibrated prior to engagement of the punch (5).

3. Method according to claim 1 or 2, **characterized in that** punch (5) and mould (9) are moved jointly during the temperature control and flow moulding operation.

4. Method according to one of claims 1 to 3, **characterized in that** mould (9) and punch (5) are centred relative to one another.

5. Device for effecting the method according to at least one of claims 1 to 4, **characterized in that** the punch (5) and the mould (9) during flow moulding are situated in a closed housing (11).

6. Device according to claim 5, **characterized in that** the mould (9) is disposed on a continuous belt (8) that runs under the punch (5).

7. Device according to claim 6, **characterized in that** running laterally of and simultaneously with the continuous belt (8) is a chain (23) or the like, on which feed pins (24) are provided.

8. Device according to one of claims 5 to 7, **characterized in that** the punch (5) is provided on a carriage (3) that moves the punch (5) in transport direction of the mould (9).

9. Device according to claim 8, **characterized in that** the carriage (3) includes a lifting device (7) for the punch (5).

10. Device according to at least one of claims 5 to 9, **characterized in that** press pins (21) project from the punch (5) towards the mould (9).

## Revendications

1. Procédé de fabrication d'articles de consommation pourvus d'une coquille extérieure à partir d'une masse apte à l'écoulement qui est versée dans un moule, un poinçon thermostatisé (5) plongeant dans le moule (9) et extrudant la masse,
**caractérisé par le fait que**
les irrégularités du moule (9) sont compensées par une pluralité de tiges à pression (21) montées à ressort.

2. Procédé selon la revendication 1, **caractérisé par le fait que** le moule (9) est vibré de manière uniforme avant que n'y plonge le poinçon (5).

3. Procédé selon la revendication 1 ou 2, **caractérisé par le fait que** le poinçon (5) et le moule (9) sont déplacés ensemble pendant l'opération de thermostatisation et d'extrusion.

4. Procédé selon l'une des revendications 1 à 3, **caractérisé par le fait que** le moule (9) et le poinçon (5) sont centrés l'un par rapport à l'autre.

5. Dispositif pour la mise en oeuvre du procédé selon au moins l'une des revendications 1 à 4, **caractérisé par le fait que** le poinçon (5) et le moule (9) se trouvent, lors de l'extrusion, dans un boîtier fermé (11).

6. Dispositif selon la revendication 5, **caractérisé par le fait que** le moule (9) est disposé sur une bande sans fin (8) qui passe au-dessous du poinçon (5).

7. Dispositif selon la revendication 6, **caractérisé par le fait que** latéralement à la bande sans fin (8) se déplace simultanément une chaîne (23) ou autre à laquelle sont prévues des tiges d'avance (24).

8. Dispositif selon l'une des revendications 5 à 7, **caractérisé par le fait que** le poinçon (5) est prévu sur un coulisseau (3) qui déplace le poinçon (5) dans la direction de transport du moule (9).

9. Dispositif selon la revendication 8, **caractérisé par le fait que** le coulisseau (3) contient un dispositif de levage (7) du poinçon (5).

10. Dispositif selon au moins l'une des revendications 5 à 9, **caractérisé par le fait que** du poinçon (5) font saillie des tiges de pression (21) en direction du moule (9).
